# EUROPEAN PATENT APPLICATION

(11) **EP 2 476 535 A1**
(43) Date of publication of application: **18.07.2012**
(21) Application number: 10815304.0
(22) Date of filing: 01.09.2010
(51) Int. Cl.: B29C 45/26, B29C 45/78

(54) **PROCESS FOR PRODUCING INJECTION-MOLDED ARTICLE**

(30) Priority: 09.09.2009 JP 2009208296
(71) Applicant: Polyplastics Co., Ltd., Tokyo 108-8280 (JP)
(72) Inventor: TAKASHIMA, Masato, Fuji-shi Shizuoka 416-8533 (JP); CAI, Hanlong, Fuji-shi Shizuoka 416-8533 (JP); MIYASHITA, Takayuki, Fuji-shi Shizuoka 416-8533 (JP)
(74) Representative: Maiwald Patentanwalts GmbH
(86) International application number: PCT/JP2010/064932
(87) International publication number: WO 2011/030707

(57) **Abstract**

To provide a method for manufacturing an injection-molded article that can control an amount of flash generated during molding, and obtain a molded article of a high degree of crystallinity.
In injection molding of a polyarylene sulfide resin composition, injection molding is performed using a mold having a heat-insulating layer formed on an inner surface of a mold, and at a mold temperature of 100°C or less.
It is preferable for the thermal layer to have a thermal conductivity ratio of 5 W/(m·K) or less.
Furthermore, a composition including a polyimide resin can be exemplified as a preferable heat-insulating layer.
The heat-insulating layer is preferably the one including a polyimide resin.

## Description

### TECHNICAL FIELD

The present invention relates to a method for manufacturing an injection-molded article in which a polyarylene sulfide resin composition is injection-molded.

### BACKGROUND ART

Polyarylene sulfide (hereinafter abbreviated as "PAS") resin, represented by polyphenylene sulfide (hereinafter abbreviated as "PPS") resin, is excellent in heat resistance, mechanical properties, chemical resistance, dimensional stability, and flame resistance. Therefore, the PAS resin has been widely used as a material for parts of electrical or electronic devices, a material for parts of vehicle devices, a material for parts of chemical devices, etc., in particular for applications under high temperatures in usage environment.

However, the PAS resin exhibits a slow crystallization speed and a high glass transition temperature; therefore, the crystalline structure is likely to be locally nonuniform. For this reason, the surface of molded articles is likely to be nonuniform in terms of appearance as well as structure.

It is therefore necessary, in order to continuously manufacture molded-articles stably using the PAS resin as a raw material, that mold temperature is set at no less than 140°C to promote crystallization. However, in this case, the higher mold temperature leads to a problem in that the amount of flash generated at parting surfaces of molds etc. becomes large.

On the other hand, when molding is performed at lower mold temperatures (e.g., 100°C or less), laborious procedures can be eliminated since temperature control can be performed using water rather than oil. Furthermore, the amount of flash generated can be reduced. However, since the molding under lower temperature condition does not promote crystallization at the surface of molded-articles, problems such as bad ejection of the molded-articles from the mold (reason: insufficient surface hardness), surface roughness change and dimensional change (or warpage) under certain environment temperature (reason: shrinkage after molding, or after-shrinkage) occur.

Methods for compounding various crystallization promoters or plasticizers for the purpose of eliminating the problems described above by increasing crystallization speed are publicly known. For example, a method for adding an oligomer ester (Patent Document 1), a method for adding a thioether (Patent Document 2), a method for adding a carboxylic acid ester (Patent Document 3), a method for adding a certain phosphoric ester (Patent Documents 4, 5, etc.), etc. are publicly known. It is said that the method for adding a certain phosphoric ester described in Patent Documents 4, 5, etc. is highly effective in particular.

A method for adding a polyphenylene ether resin (polyphenylene oxide resin) and a certain phosphorus compound in order to improve surface of molded articles, properties, or flame resistance is publicly known in the molded articles formed of a resin composition containing the PAS resin (Patent Document 6, etc.).
[Patent Document 1] Japanese Unexamined Patent Application, Publication No. S62-45654
[Patent Document 2] Japanese Unexamined Patent Application, Publication No. S62-230849
[Patent Document 3] Japanese Unexamined Patent Application, Publication No. S62-230848
[Patent Document 4] Japanese Unexamined Patent Application, Publication No. H01-225660
[Patent Document 5] Japanese Unexamined Patent Application, Publication No. 2003-335945
[Patent Document 6] Japanese Unexamined Patent Application, Publication No. H07-145310

### DISCLOSURE OF THE INVENTION

### Problems to be Solved by the Invention

There arise problems, in the methods described in Patent Documents 1 to 5, such as generation of gas during melting and molding, roughness problem of molded surface due to retention within injection unit etc., and decrease of mechanical properties of molded articles.

As described above, the method for adding a phosphoric ester is highly effective; however, the method described in Patent Document 4 has a problem of insufficient thermal stability during melting at high temperatures. The method described in Patent Document 5 is excellent in thermal stability during melting at high temperatures, but has a problem that the phosphoric ester bleeds out due to continuous exposure of the molded articles under high temperatures (e.g., 180°C).

There arise problems, in the method described in Patent Document 6 etc., such as generation of gas during melting and molding, roughness of molded surface, and decrease of mechanical properties of molded articles, similarly as the method for adding a phosphoric ester described above.

Furthermore, mold temperature is typically set to a condition of above 100°C even in the methods for compounding additives described above. When molding is performed at mold temperatures above 100°C, molded articles with a high degree of crystallinity are likely to be obtained; however, there arises a problem that the amount of flash generated increases since it takes a long time for the resin, which has flowed into the very narrow space between the parting surfaces of molds, to solidify. Furthermore, a mold temperature above 100°C requires great care since temperature control cannot be performed by water and thus the temperature control must be performed using oil.

As described above, the methods for compounding additives to the PAS resin cannot produce molded articles having a high degree of crystallinity and also reduce the amount of flash generated. A method for manufacturing a molded article, which satisfies all of these requirements, has been required; however, when the mold temperature is set higher, there arise problems such as requirement of great care in temperature control of molds and larger amounts of flash generated, on the hand, when the mold temperature is set lower, molded articles with a high degree of crystallinity cannot be obtained although great care in temperature control of molds may be mitigated and the amount of flash generated may be reduced. Accordingly, it has been considered very difficult to reduce the amount of flash generated and to obtain molded articles with a high degree of crystallinity.

The present invention has been made to solve the problems described above; and it is an object of the present invention to provide a method for producing a method for manufacturing an injection-molded article that can reduce the amount of flash generated and obtain a molded article with a high degree of crystallinity.

### Means for Solving the Problems

The present inventors have thoroughly investigated to solve the problems described above. As a result, it has been found that the problems can be solved by performing injection molding using a mold having a heat-insulating layer formed on an inner surface of a mold, and at a mold temperature of 100°C or less, thereby completing the present invention. More specifically, the present invention provides the following:
In a first aspect, a method for manufacturing an injection-molded article of a polyarylene sulfide resin composition is provided, wherein injection molding is performed using a mold having a heat-insulating layer formed on an inner surface of a mold, and at a mold temperature of 100°C or less.

According to a second aspect of the present invention, in the method for manufacturing an injection-molded article according to the first aspect, the heat-insulating layer has a thermal conductivity of 5 W/(m·K) or less.

According to a third aspect of the present invention, in the method for manufacturing an injection-molded article according to the first or second aspect, the heat-insulating layer includes a polyimide resin.

According to a fourth aspect of the present invention, in the method for manufacturing an injection-molded article according to any one of the first to third aspects, the polyarylene sulfide resin composition includes a polyphenylene sulfide resin.

### Effects of the Invention

In accordance with the present invention, a mold having a heat-insulating layer formed on an inner surface of a mold is used as the mold for injection molding. As a result, molded articles of a high degree of crystallinity can be obtained even under a condition that the mold temperature is 100°C or less.

Since molded articles of a high degree of crystallinity can be obtained even under a condition that the mold temperature is 100°C or less, temperature control of the mold can be performed by water. For this reason, molded articles of a high degree of crystallinity can be easily obtained in accordance with the present invention. Furthermore, when the mold temperature is 100°C or less, molten resin penetrated between parting surfaces of molds immediately solidifies, therefore, the amount of flash generated can be remarkably reduced.

### BRIEF DESCRIPTION OF THE DRAWINGS

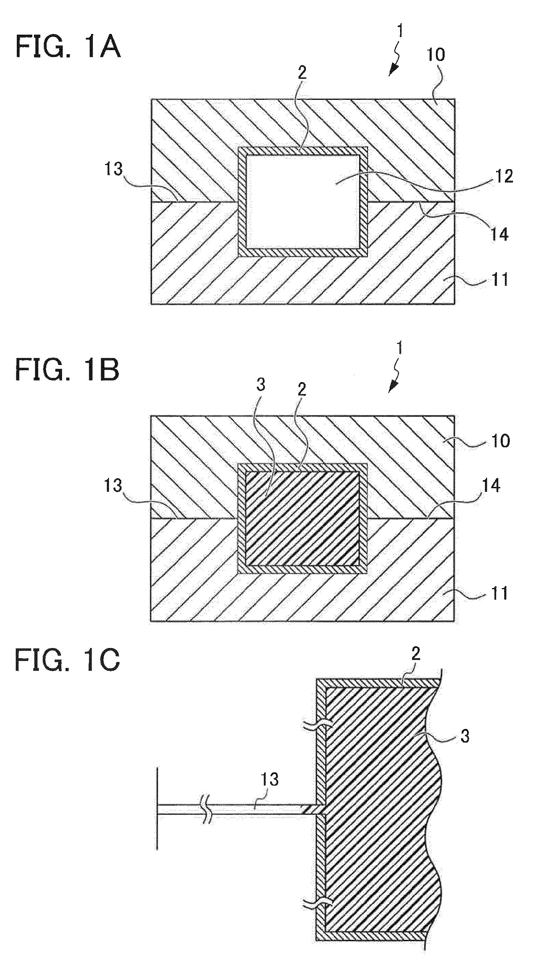

FIG. 1 is a cross-section view of a mold used in the method for manufacturing an injection-molded article of the present invention: 1A is a cross-section view showing a condition in which a heat-insulating layer has been formed on a pair of divided molds that has been clamped; 1B is a cross-section view showing a condition in which the PAS resin composition of molten state has flowed into a cavity where a heat-insulating layer has been formed; and 1C is an enlarged cross-section view of a part of parting surfaces of divided molds under a condition in which the PAS resin composition of molten state has flowed into a cavity where a heat-insulating layer has been formed.

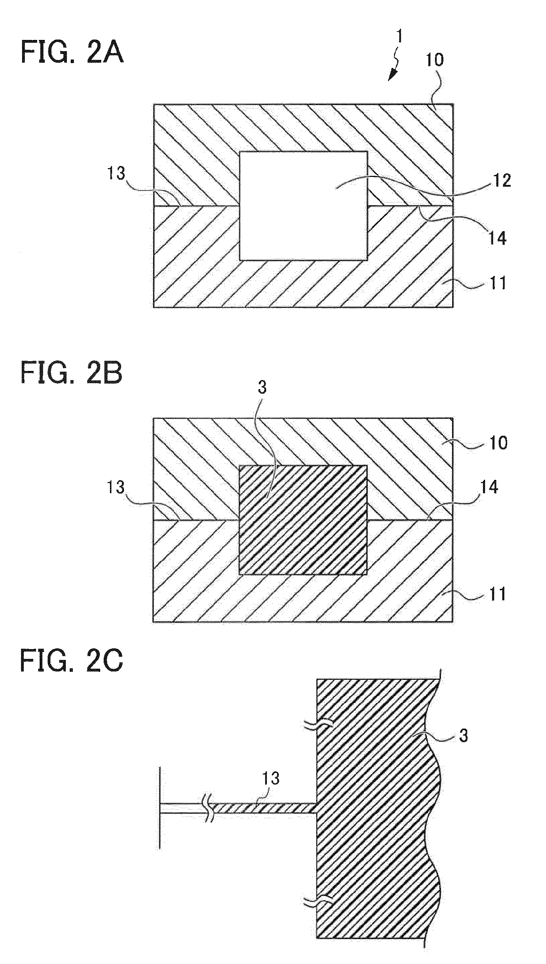

FIG. 2 is a cross-section view of a mold used in a method for manufacturing an injection-molded article of the prior art: 2A is a cross-section view showing a condition in which a pair of divided molds has been clamped; 2B is a cross-section view showing a condition in which the PAS resin composition of molten state has flowed into a cavity where a heat-insulating layer has not been formed; and 2C is an enlarged cross-section view of a part of parting surfaces of divided molds under a condition in which the PAS resin composition of molten state has flowed into a cavity where a heat-insulating layer has not been formed.

### PREFERRED MODE FOR CARRYING OUT THE INVENTION

The present invention is explained with respect to embodiments thereof below. The present invention is not limited to the invention described below.

The present invention is a method for manufacturing an injection-molded article, in which injection molding is performed using a mold having a heat-insulating layer formed on an inner surface of a mold, and at a mold temperature of 100°C or less. The PAS resin composition as the material, the method for manufacturing an injection-molded article of the present invention, and an injection-molded article resulting from the manufacturing method of the present invention are explained in order below.

### Polyarylene Sulfide Resin Composition

The present invention solves the specific problems occurring when a resin composition, containing the PAS resin having a feature of a slow crystallization speed, is used as a material to be molded. The PAS resin, contained in the resin composition of the material to be molded, may be conventional PAS resins, without particular limitation thereto. For example, PAS resins below may be exemplified.

### [PAS resin]

The polyarylene sulfide-derived resin, contained in the resin composition, mainly comprises -(Ar-S)- (Ar=arylene group) as a repeating unit. In the present invention, a PAS resin having a generally known molecular structure can be used.

The arylene group includes, but is not specifically limited to, for example, p-phenylene group, m-phenylene group, o-phenylene group, substituted phenylene group, p, p'-diphenylenesulfone group, p, p'-biphenylene group, p, p'-diphenyleneether group, p, p'-diphenylenecarbonyl group, naphthalene group. Among arylene sulfide groups having the arylene groups, preference is given to a homopolymer using the same repeating units, as well as a polymer comprising repeating units having heterogeneous arylene sulfide groups.

A homopolymer having a repeating unit of p-phenylene sulfide groups as the arylene group is preferable as the homopolymer, although depending on the application. This is because the homopolymer with the p-phenylene sulfide group as the repeating unit has very high heat-resistance, and exhibits high strength, high stiffness and high dimensional stability over a wide temperature range. Molded articles with very excellent properties can be obtained by using the homopolymer.

Among arylene sulfide groups having the arylene group, a combination of at least two different arylene sulfide groups can be polymerized to form a copolymer. Among these, a combination of p-phenylene sulfide group with m-phenylene sulfide group is preferably used in view of obtaining molded articles with excellent properties in terms of heat-resistance, moldability, mechanical property, etc. It is desirable for the polymer to comprise no less than 70 mol% of the p-phenylene sulfide group, more preferably no less than 80 mol% of the p-phenylene sulfide group.

The PAS resin having the p-phenylene sulfide group and the m-phenylene sulfide group as repeating units is particularly demanded for increase of the degree of crystallinity in molded articles, etc. The high degree of crystallinity can be achieved by using the method for manufacturing an injection-molded article of the present invention. Furthermore, the method for manufacturing an injection-molded article of the present invention may be free from problems in terms of workability and productivity. Here, the PAS resin having a phenylene sulfide group is a PPS (polyphenylene sulfide) resin.

### [Other Components]

The PAS resin composition used in the present invention may contain other resins within a range not hindering the effect of the present invention. Compositions added with additives such as nucleating agent, carbon black, pigment like inorganic calcined pigment, antioxidizing agent, stabilizing agent, plasticizer, lubricant, release agent, and flame retarder in order to impart desirable properties are also encompassed by the PAS resin composition used in the present invention.

### [Properties of PAS Resin Composition]

One feature of the present invention is a lower amount of flash generated since the molten resin that penetrates between parting surfaces of molds immediately solidifies. A melt viscosity of the PAS resin composition changes variously depending on the application since the components in the resin composition vary depending on the application; however, the generation of flash can be sufficiently reduced even when the melt viscosity of the PAS resin composition is 300 Pa·s or less by using the manufacturing method of the present invention. In this case, the melt viscosity is measured in accordance with ISO11443, and the measurement is obtained. More specifically, melt viscosity is measured using a flat mold of 1 mmϕ × 20 mmL as a capillary at a barrel temperature of 310°C and a shear rate of 1000 sec⁻¹.

### Method for Manufacturing an Injection-Molded Article

The method for manufacturing an injection-molded article of the present invention is characterized in that a mold having a heat-insulating layer formed on an inner surface of a mold is used. Therefore, an explanation is given initially with respect to the mold used in the method for manufacturing an injection-molded article of the present invention.

### [Mold]

In the method for manufacturing an injection-molded article of the present invention, the mold having a heat-insulating layer formed on an inner surface of a mold (surface inside the mold) is used. By action of the heat-insulating layer formed on an inner surface of a mold, the PAS resin composition flowed into the mold is unlikely to solidify near the surface of the mold. As a result, the PAS resin composition can be prevented from rapid cooling at the surface of the mold and also from solidifying without crystallization, and thus molded articles of a high degree of crystallinity can be obtained.

Furthermore, the heat brought by the molten resin that has flown into the mold is unlikely to dissipate out of the mold by the effect of the heat-insulating layer formed on inner surface of a mold. As a result, the PAS resin composition can be prevented from rapid cooling at the surface of the mold even under a condition of lower temperatures of the mold, and the degree of crystallinity of molded articles can be increased. When the manufacturing method of the present invention is employed, molded articles with a high degree of crystallinity can be obtained even when the mold temperature is set to 100°C or less. When the mold temperature is 100°C or less, temperature control of the mold can be performed by water. For this reason, molded articles of a high degree of crystallinity can be easily obtained by employing the method for manufacturing an injection-molded article of the present invention. It is preferred in the present invention that the mold temperature is set to 80°C or less. This is because the amount of flash generated can be remarkably reduced along with sufficiently increasing the degree of crystallinity of molded articles.

Material etc. of the heat-insulating layer formed on the inner surface of a mold is not particularly limited as long as it can suppress dissipation of heat brought by the molten resin so that crystallization of the PAS resin proceeds at the mold surface and solidification of the molten resin can be retarded. Those having the heat-insulating layer formed on a part of the inner surface of a mold (wall surface of cavity) are also encompassed by the "mold having a heat-insulating layer formed on an inner surface of a mold". In the method for manufacturing an injection-molded article of the present invention, it is necessary that the heat-insulating layer has been formed on at least all desired parts of the inner surface of a mold which correspond to the parts where a high degree of crystallinity is required in the resulting molded article, and preferably it has been formed on all of the inner surface of a mold.

Furthermore, the amount of flash generated can be remarkably reduced by employing the method for manufacturing an injection-molded article of the present invention. The effect on increasing the degree of crystallinity of molded articles of the present invention and the effect on reducing the amount of flash generated are simply explained with reference to figures. FIG. 1 is a view showing a mold used in the method for manufacturing an injection-molded article of the present invention, and FIG. 2 is a view showing a mold used in a method for manufacturing an injection-molded article of the prior art. FIG. 1A is a cross-section view showing a condition in which a heat-insulating layer has been formed on a pair of divided molds that has been clamped. FIG. 1B is a cross-section view showing a condition in which the PAS resin composition of molten state has flowed into a cavity where a heat-insulating layer has been formed. FIG. 1C is an enlarged cross-section view at a part of parting surfaces of divided molds under a condition in which the PAS resin composition of molten state has flowed into a cavity where a heat-insulating layer has been formed. FIG. 2A is a cross-section view showing a condition in which a pair of divided molds has been clamped. FIG. 2B is a cross-section view showing a condition in which the PAS resin composition of molten state has flowed into a cavity where a heat-insulating layer has not been formed. FIG. 2C is an enlarged cross-section view at a part of parting surfaces of divided molds under a condition in which the PAS resin composition of molten state has flowed into a cavity where a heat-insulating layer has not been formed.

As shown in FIG. 1A, the mold 1 consists of divided molds 10, 11. As also shown in FIG. 1A, a pair of divided molds 10, 11, which has been clamped, is equipped with a cavity 12 and parting surface 13, 14 of the divided molds. The "inner surface of a mold" indicates a wall surface of the cavity 12, and the heat-insulating layer 2 has been formed on the entire wall surface of the cavity 12 as shown in FIG. 1A. As apparent from FIGs. 1, 2, the mold shown in FIG. 2 is the same as the mold shown in FIG. 1 except that the heat-insulating layer 2 has not been formed.

FIG. 1B shows a condition in which the PAS resin composition 3 of molten state has flowed into a cavity 12 when the mold temperature is 100°C or less. As shown in FIGs. 1A to 1C, the PAS resin composition around the wall surface of the cavity 12 is unlikely to harden since the heat-insulating layer 2 has been formed on the wall surface of the cavity 12 in accordance with the manufacturing method of the present invention. As a result, the PAS resin even with a slow crystallization speed undergoes crystallization, which can result in molded articles with a high degree of crystallinity.

FIG. 2B shows a condition in which the PAS resin composition of molten state has flowed into a cavity 12, where the heat-insulating layer has not been formed, when the mold temperature is 100°C or less. As shown in FIGs. 2A to 2C, since the heat-insulating layer has not been formed in the cavity 12 of molds used in the conventional manufacturing method, the PAS resin composition is rapidly cooled when the mold temperature is 100°C or less. As a result, the PAS resin with a slow crystallization speed solidifies before sufficient progress of crystallization, thus molded articles with a high degree of crystallinity cannot be obtained.

FIG. 1C shows an enlarged cross-section view near parting surfaces 13 of divided molds under a condition in which the PAS resin composition 3 of molten state has flowed into a cavity 12. As shown in FIG. 1C, the heat-insulating layer 2 has been formed at the parting surfaces. Then the mold temperature is set to 100°C or less in the method for manufacturing an injection-molded article of the present invention. Therefore, the PAS resin composition 3 of molten state, which has flowed between the parting surfaces 13, 14 of divided molds, immediately solidifies, thereby the amount of flash generated can be remarkably reduced.

FIG. 2C shows an enlarged cross-section view near the parting surface 13 of divided molds under a condition in which the PAS resin composition of molten state has flowed into a cavity 12 where a heat-insulating layer has not been formed when the mold temperature is above 140°C. The injection molding is performed with setting the mold temperature to a temperature of 140°C or more; however, solidification of the PAS resin composition penetrated between the parting surfaces 13, 14 of divided molds is retarded when the mold temperature becomes higher. As a result, the amount of flash generated increases with conventional manufacturing methods. When the mold temperature is set lower in order to reduce the amount of flash generated, the PAS resin is rapidly cooled and immediately solidifies at the wall surface of the cavity. The PAS resin has a slow speed of crystallization, therefore, the degree of crystallinity of molded articles becomes lower when it is rapidly cooled and immediately solidifies.

The thickness of the heat-insulating layer, which is not particularly limited, may be appropriately set to a preferable thickness depending on a material to be used, a shape of the molded article, etc. It is preferred that the thickness of the heat-insulating layer is no less than 20 µm since a sufficiently high heat-insulating effect can be obtained. The thickness of the heat-insulating layer formed on the inner surface of a mold may be uniform; alternatively sites with a different thickness may be included in the heat-insulating layer.

It is also preferred in particular that a thermal conductivity of the heat-insulating layer formed on the inner surface of a mold is 5 W/(m·K) or less. When the thermal conductivity of the heat-insulating layer is adjusted within the range, injection-molded articles with a high degree of crystallinity can be more easily obtained even when injection-molded articles are manufactured at a mold temperature of 100°C or less. Here, the thermal conductivity described above indicates one measured by the method described in Examples.

It is also necessary for the heat-insulating layer to have heat resistance so that it can withstand high temperatures during molding since the PAS resin composition at high temperatures flows into the molds during injection molding.

It is preferred that the heat-insulating layer formed on the inner surface of the mold used in the method for manufacturing an injection-molded article of the present invention contains a polyimide resin. This is because the polyimide resin has a thermal conductivity of 5 W/(m·K) or less and also heat resistance sufficiently durable to high temperatures during injection molding. Examples of the polyimide resin which can be employed, include pyromellitic acid (PMDA) polyimide, biphenyl tetracarboxylic acid polyimide, polyamide-imide using trimellitic acid, bismaleimide resin (bismaleimide/triazine etc.), benzophenone tetracarboxylic acid polyimide, acetylene-terminated polyimide, thermoplastic polyimide, and the like. In addition, it is particularly preferred that the heat-insulating layer consists of the polyimide resin. Preferable materials other than the polyimide resin are exemplified by a tetrafluoroethylene resin etc.

The method for forming the heat-insulating layer on the inner surface of the mold is not particularly limited. For example, the heat-insulating layer is preferably formed on the inner surface of the mold by the methods below.

There are exemplified by a method for forming a heat-insulating layer of a polyimide film etc. by coating a solution of polymer precursor such as polyimide precursor on a mold surface, heating to evaporate a solvent thereof, and heating further to cause polymerization; a method for vapor-depositing and polymerizing a monomer of heat-resistant polymer such as pyromellitic acid anhydride and 4,4-diamino diphenyl ether; or when a planar mold is used, an appropriate method for adhering a heat-insulating polymer film or a method for forming a heat-insulating layer by adhering an adhesive tape or a heat-insulating polymer film on a desired part of a mold. It is also possible that a polyimide film is formed and then a chromium (Cr) film or a titanium nitride (TiN) film is formed as a hard metal film on the surface.

Molding Conditions other than the mold temperature may be appropriately set depending on materials to be used and shapes of injection-molded articles.

### Injection-Molded Article

As described above, injection-molded articles containing the PAS resin composition prepared by the manufacturing method of the present invention are sufficiently high in terms of the degree of crystallinity. As the crystallinity progresses, the molded articles become harder and the hardness thereof becomes higher. For this reason, the hardness of molded articles is an index for evaluating the degree of crystallinity. In this invention, "high degree of crystallinity" indicates that the molded articles are higher in terms of the degree of crystallinity compared to the molded articles prepared using a mold where the heat-insulating layer has not been formed. In accordance with the manufacturing method of the present invention, the Vickers hardness of the resulting molded articles is higher by 10 kgf/mm² or more than that of the molded articles prepared by the conventional manufacturing methods; and molded articles with a surface hardness of 33.0 kgf/mm² or more, which corresponds to the Vickers hardness of the molded articles resulting from conventional injection molding at a mold temperature of 140°C, can be obtained. The values of the Vickers hardness are obtained by the method described in Examples.

### EXAMPLES

The present invention is more specifically explained based on examples, but the present invention is not limited to the examples.

### Material

PAS resin composition: polyphenylene sulfide resin composition (Fortron 1140A64, by Polyplastics Co., Ltd.), 230 Pa·s of melt viscosity in accordance with ISO 11443
Material for forming heat-insulating layer: varnish of polyimide resin (by Fine Chemical Japan Co., Ltd.), 0.2 W/(m·K) of thermal conductivity

The thermal conductivity of the polyimide resin was calculated from a thermal diffusion factor based on a laser flush method, a specific gravity based on Archimedes method, and a specific heat based on DSC.

### Example 1

A heat-insulating material was sprayed onto a mold cavity (flat plate shape of 40mm square with a thickness of 1mm), and was baked at 250C for 1 hour to build up a heat-insulating layer (Polyimide). This layer then was polished to the right thickness shown in Table 1, and PAS was molded within the cavity under the condition of mold temperature also shown in Table 1, and thereby obtained the injection-molded article. In addition, conditions other than the molding conditions shown in Table 1 are indicated below.

### [Molding Condition]

Rotation number of screw: 100 rpm
Injection speed: 100 mm/sec

### Example 2

An injection-molded article was prepared under the same conditions as those of Example 1 except that the mold temperature was changed from 40°C to 80°C.

### Example 3

An injection-molded article was prepared under the same conditions as those of Example 1 except that the mold temperature was changed from 40°C to 100°C.

### Comparative Example 1

An injection-molded article was prepared under the same conditions as those of Example 1 except that a mold, where the heat-insulating layer had not been formed, was used.

### Comparative Example 2

An injection-molded article was prepared under the same conditions as those of Comparative Example 1 except that the mold temperature was changed from 40°C to 80°C.

### Comparative Example 3

An injection-molded article was prepared under the same conditions as those of Comparative Example 1 except that the mold temperature was changed from 40°C to 100°C.

### Comparative Example 4

An injection-molded article was prepared under the same conditions as those of Comparative Example 1 except that the mold temperature was changed from 40°C to 140°C.

### Evaluation

The injection-molded articles prepared by the manufacturing methods of Examples 1 to 3 and Comparative Examples 1 to 4 were evaluated in terms of Vickers hardness and flash length.

### [Evaluation of Vickers Hardness]

The Vickers hardness of a surface of an injection-molded article was measured under the condition of 25 gf of load and 25 seconds of loading time using a micro Vickers hardness tester (by Matsuzawaseiki. Co., Ltd., DMH-1LS). The measurement results are shown in Table 1. Here, 33.0 kgf/mm² or more of Vickers hardness represents sufficient crystallization at the surface.

### [Evaluation of Flash Length]

The flash length at four edges of a flat plate (40mm square with a thickness of 1mm) was measured by using a Vision Measuring Machine to magnify the target, and the maximum value was defined as the flash length.

The measurement results are shown in Table 1.

**[Table 1]**

| | Example s 1 | Example s 2 | Example s 3 | Compara tive Example 1 | Compara tive Example 2 | Compara tive Example 3 | Compara tive Example 4 |
|---|---|---|---|---|---|---|---|
| Thickness of Polyimide Film (*µ*m) | 20 | 20 | 20 | 0 | 0 | 0 | 0 |
| mold temperature (°C) | 40 | 80 | 100 | 40 | 80 | 100 | 140 |
| Vickers hardness (kgf/mm²) | 34.4 | 33.4 | 34.6 | 22.6 | 22.3 | 22.8 | 33.9 |
| Flash Length (*µ*m) | 12 | 14 | 29 | 13 | 12 | 32 | 75 |

As apparent from the results of Examples 1 to 3 shown in Table 1, the amount of flash generated can be reduced during molding along with providing a sufficient Vickers hardness. Furthermore, temperature control of the mold could be performed by water in Examples 1 to 3 since the mold temperature was 100°C or less.

As is apparent from the results of Examples 1 to 3 and Comparative Example 4, in accordance with the manufacturing method of the present invention, the Vickers hardness can be as high as that achieved when a mold temperature of 140°C is used. This result demonstrates, in accordance with the manufacturing method of the present invention, that the degree of crystallinity can be as high as that achieved when a mold temperature of 140°C is used, even when the mold temperature is 100°C or less.

As is apparent from the results of Examples 1 to 3, the amount of flash generated can be remarkably reduced and Vickers hardness can be sufficiently increased even when the mold temperature is 100°C or less.

### EXPLANATION OF REFERENCE NUMERALS

- 1:: mold
- 10, 11:: divided molds
- 12:: cavity
- 13, 14:: parting surfaces of divided molds
- 2:: heat-insulating layer
- 3:: PAS resin composition

## Claims

1. A method for manufacturing an injection-molded article of a polyarylene sulfide resin composition, wherein injection molding is performed using a mold having a heat-insulating layer formed on an inner surface of a mold, and at a mold temperature of 100°C or less.

2. The method for manufacturing an injection-molded article according to claim 1, wherein the heat-insulating layer has a thermal conductivity of 5 W/(m·K) or less.

3. The method for manufacturing an injection-molded article according to claim 1 or 2, wherein the heat-insulating layer includes a polyimide resin.

4. The method for manufacturing an injection-molded article according to any one of claims 1 to 3, wherein the polyarylene sulfide resin composition includes a polyphenylene sulfide resin.

5. An injection-molded article obtained using the method for manufacturing according to any of claims 1 to 4, wherein the value of Vickers hardness is bigger than 33.0 kgf/mm²
